**Europäisches Patentamt**

**European Patent Office**

**Office européen des brevets**

(19)

(11) **EP 1 276 250 A2**

(12) ## EUROPÄISCHE PATENTANMELDUNG

(43) Veröffentlichungstag:
**15.01.2003 Patentblatt 2003/03**

(51) Int Cl.⁷: **H04B 3/54**

(21) Anmeldenummer: **02014930.8**

(22) Anmeldetag: **08.07.2002**

(84) Benannte Vertragsstaaten:
**AT BE BG CH CY CZ DE DK EE ES FI FR GB GR
IE IT LI LU MC NL PT SE SK TR**
Benannte Erstreckungsstaaten:
**AL LT LV MK RO SI**

(30) Priorität: **10.07.2001 BY 20010596
08.09.2001 DE 10144118**

(71) Anmelder: **Rojal GmbH
58513 Lüdenscheid (DE)**

(72) Erfinder: **Bohlender, Sergej
58332 Schwelm (DE)**

(74) Vertreter: **Patentanwälte Ostriga & Sonnet
Stresemannstrasse 6-8
42275 Wuppertal (DE)**

(54) **Vorrichtung zur Steuerung einer Mehrzahl von Beschattungsanlagen**

(57) Dargestellt und beschrieben ist eine Vorrichtung (210) zur Steuerung einer Mehrzahl von Beschattungsanlagen (213), wie Rolladen, Markisen od. dgl., wobei den Beschattungsanlagen (213) jeweils ein gesonderter Antrieb (214) zugeordnet ist, der mit einer gemeinsamen Netz-Spannungs-Versorgungsleitung (216) unter Zwischenschaltung einer Steuereinheit (215, 215a) verbunden ist, die Signale nach Art von Steuer- und /oder Statusinformationen über die Netz-Spannungs-Versorgungsleitung (216) überträgt und empfängt, und auf diese Weise mit anderen Steuereinheiten (215, 215a) kommuniziert, wobei die Signale rauschartig auf die Netz-Spannungs-Versorgungsleitung (216) aufmoduliert sind

FIG. 1

Printed by Jouve, 75001 PARIS (FR)

**Beschreibung**

Die Erfindung betrifft eine Vorrichtung zur Steuerung einer Mehrzahl von Beschattungsanlagen.

Im Stand der Technik sind zunächst Vorrichtungen zur Steuerung von Beschattungsanlagen bekannt, bei der jeder Beschattungsanlage ein gesonderter Antrieb, insbesondere ein Rolladenmotor zugeordnet ist. Der Antriebsmotor ist hier sowohl mit einer Spannungsversorgung als auch mit einer Steuereinheit verbunden, mittels welcher der Antriebsmotor Befehle empfangen kann. Die Steuereinheit kann hierzu auch eine Eingabe-Einheit aufweisen, mittels der manuell Befehle, wie z.B. "Rollade hochfahren" oder "Rollade herunterfahren" einem Antriebsmotor übergeben werden.

Um mit einer ersten Steuereinheit, die einem ersten Antriebsmotor zugeordnet ist, auch weitere Antriebsmotoren steuern zu können, sind die Steuereinheiten mittels separater Signalleitungen miteinander verbunden. Es handelt sich hierbei um ein zu dem Spannungsversorgungsnetz paralleles Netz. Hierdurch wird ein sehr großer Montageaufwand notwendig, da gesonderte Leitungen verlegt werden müssen.

Ein weiterer druckschriftlich nicht belegbarer Stand der Technik sieht bereits eine Steuer-Signalübertragung zwischen verschiedenen Steuereinheiten über die Spannungsversorgungsleitung vor. Hierzu weist jede Steuereinheit eine Sender-Empfänger-Einheit auf, die die Signale auf die Netz-Spannungs-Versorgungsleitung aufbringt bzw. von dieser Leitung trennen kann. Um Signale zwischen zwei Steuereinheiten über eine bestimmte Leitungslänge, entsprechend einem typischen, in einem Wohnhaus erforderlichen Leitungsweg, übertragen zu können, werden von einer ersten Steuereinheit Signale mit einer großen Signalintensität auf die Netz-Spannungs-Versorgungsleitung aufgebracht. Diese Signale liegen deutlich über dem üblichen Rauschniveau und sind sowohl im zeitlichen Verlauf wie auch bei einer frequenzabhängigen Betrachtung deutlich als Peak erkennbar. Die entsprechenden Signalpaketleistungen liegen im Bereich mehrerer Watt, beispielsweise zwischen 2 und 5 W.

Für den Fall, daß kurzzeitige Spannungsimpulse im Spannungsversorgungsnetz auftreten, beispielsweise durch ein Schalten eines Elektrogeräts, beispielsweise auch durch das Anfahren eines Antriebsmotors einer Beschattungsanlage, kann es zu Überlagerungen eines Störsignals mit dem gesendeten Signal derart kommen, daß das gesendete Signal von einer Empfängereinheit in der Steuereinheit nicht mehr detektiert werden kann. Das übertragene Signal erreicht in diesem Falle nicht den vorgesehenen Empfänger, so daß die Information verloren geht.

Die im Stand der Technik gewählte Art der Signalübertragung bedingt darüber hinaus sehr großvolumige Bauteile, da auf Grund der verhältnismäßig großen Signalleistungen von vielleicht 5 W entsprechend große, ausreichend dimensionierte Transformatoren und andere Bauteile eingesetzt werden müssen.

Der Erfindung liegt die Aufgabe zu Grunde, eine Vorrichtung zur Steuerung einer Mehrzahl von Beschattungsanlagen, wie Rolladen, Markisen oder dgl. derart weiterzubilden, daß eine sichere, störunanfällige Signalübertragung möglich wird.

Die Erfindung löst diese Aufgabe mit den Merkmalen des Anspruches 1. Demgemäß ist eine Vorrichtung zur Steuerung einer Mehrzahl von Beschattungsanlagen, wie Rolladen, Markisen oder dgl. vorgesehen, wobei den Beschattungsanlagen jeweils ein gesonderter Antrieb zugeordnet ist, der mit einer gemeinsamen Netz-Spannungs-Versorgungsleitung unter Zwischenschaltung einer Steuereinheit verbunden ist, die Signale nach Art von Steuerund /oder Statusinformationen über die Netz-Spannungs-Versorgungsleitung überträgt und empfängt, und auf diese Weise mit anderen Steuereinheiten kommuniziert, wobei die Signale rauschartig auf die Netz-Spannungs-Versorgungsleitung aufmoduliert sind.

Das Prinzip der Erfindung besteht damit im wesentlichen darin, an Stelle einer im Stand der Technik vorgesehenen peak-artigen Signalübertragung, bei der hohe Signalintensitäten, die weit über dem üblichen Rauschen liegen, und beispielsweise 3-10 V betragen, nunmehr eine andersartige Signalaufbringung auf die Spannungsversorgungsleitung vorzusehen. Nunmehr werden die eigentlichen Signale, also die Steuer- und/oder Statusinformationen für alle Beschattungsanlagen in einer Art Rauschen versteckt, derart, daß sie als klar definierte Spitzen oder Peaks aus einem Frequenzspektrum oder aus einem zeitlichen Verlauf der Signalintensität nicht mehr deutlich hervorgehen müssen. Die Signale werden dabei durch eine besondere Kodierung mit einer Trägerfrequenz in einen bestimmten Frequenzbereich derart versteckt, daß die Vielzahl der übertragenen Informationen garantiert, daß auch bei großen Störungen immer eine zur Signalerkennung notwendige Zahl von Teilsignalen oder von Signalanteilen beim Empfänger ankommt.

Die zur Steuerung von Beschattungsanlagen notwendigen, zu übertragenden Informationen sind dabei grundsätzlich derart knapp faßbar, daß auf Grund der geringen, zu übertragenden Datenmenge eine rauschartige Signalausbildung möglich wird.

Dadurch, daß die Signale nunmehr nicht mehr in Form von deutlich erkennbaren, leistungsintensiven Signal-Peaks übertragen werden, kann auf voluminöse Baueinheiten wie große Transformatoren etc., verzichtet werden. Dies schafft die Möglichkeit, die erforderlichen Bauteile auf eine sehr kleine Bauform zu reduzieren, derart, daß jede Steuereinheit eine Bauform aufweisen kann, die den Innenabmessungen einer herkömmlichen Unterputzinstallationsdose entsprechen kann. Auf diese Weise wird der erforderliche Montageaufwand deutlich reduziert. Auch die Herstellungskosten können nunmehr deutlich geringer angesetzt werden.

Die erfindungsgemäße Art der Signalaufmodulation bedeutet dabei nicht zwingend, daß die übertragenen Signale in dem dort aktuell vorhandenen Leitungsrauschen liegen müssen. Es ist erfindungsgemäß jedoch möglich, Signale innerhalb des auf der Netz-Spannungs-Versorgungsleitung vorhandenen Rauschens anzuordnen, so daß ein Signal-Rauschverhältnis von ≤ 0 dB möglich wird.

Das erfindungsgemäße System weist darüber hinaus die Möglichkeit auf, ohne Vorsehen einer gesonderten Zentrale das System dezentral zu steuern. Hierdurch wird der Montageaufwand weiter reduziert.

Erfindungsgemäß wird es darüber hinaus möglich, die Signale in einem Frequenzbereich zwischen 140 und 148,5 khz anzuordnen. Dieser an sich zur Übertragung von Signalen nicht geeignete, weil zu schmale Frequenzbandbereich kann durch die besondere Art der Signal-Aufmodulation nunmehr verwendet werden, wobei zusätzlich der Vorteil besteht, daß dieser Frequenzbandbereich von wenigen Anwendungen benutzt wird und insoweit besonders störungsfrei ausgebildet ist, so daß die erfindungsgemäße Vorrichtung weiter störunanfällig ausgebildet wird.

Gemäß einer vorteilhaften Ausgestaltung der Erfindung sind die Signale in einem Frequenzbandbereich zwischen 140 und 148,5 khz angeordnet. Diese Ausgestaltung bietet den Vorteil einer weit erhöhten Sicherheit, da dieser Frequenzbandbereich auf Grund seiner nur sehr geringen Breite von anderen Übertragungsprotokollen praktisch kaum verwendet wird, und insoweit besonders wenige Störsignale in diesem Frequenzbandbereich vorliegen.

Darüber hinaus bietet die Anordnung der Signale in dem relativ schmalen Frequenzbandbereich die Möglichkeit, von anderen Steuerungen nahezu unabhängig, ohne die Gefahr besonderer Interferenzen, arbeiten zu können.

Gemäß einer weiteren vorteilhaften Ausgestaltung der Erfindung erfolgt die rauschartige Signal-Aufmodulation mittels der Spread-Spectrum-Technologie. Dies bietet die Möglichkeit auf eine grundsätzlich bekannte Technologie zugreifen zu können. Informationen zu der Spread-Spektrum-Technologie können beispielsweise der Website www.ss-mag.com/ss.html entnommen werden.

Gemäß einer weiteren vorteilhaften Ausgestaltung der Erfindung erfolgt die Signal-Modulation mittels einer Phasenmodulation, insbesondere mittels der BPSK-Modulation. Diese Ausgestaltung bietet die Möglichkeit, eine besonders sichere und einfache Modulationstechnik verwenden zu können, wobei sich darüber hinaus der Vorteil bietet, auf eine bekannte Technologie zurückgreifen zu können.

Gemäß einer weiteren vorteilhaften Ausgestaltung der Erfindung weist die Steuereinheit zur Ankopplung der Signale an die Spannungs-Versorgungsleitung einen Tranceiver auf. Auf diese Weise können identische Bauelemente in Form eines Tranceivers für jede Steuereinheit vorgesehen werden, so daß der Herstellungsaufwand reduziert wird.

Gemäß einer weiteren vorteilhaften Ausgestaltung der Erfindung weist die Steuereinheit eine die Innenabmessungen einer herkömmlichen Unterputz-Installationsdose nicht überschreitende Bauform auf. Diese Ausgestaltung ermöglicht eine besonders platzsparende Unterbringung der Steuereinheiten, so daß keine besonderen Maßnahmen vorgesehen werden müssen, um die Steuereinheiten unterzubringen. Insbesondere großdimensionierte, klobige und auf Grund der im Stand der Technik notwendigen Signalleistungen auch ständig brummende bzw. gegebenenfalls eine Kühlung benötigende Steuereinheiten können nunmehr entfallen.

Gemäß einer weiteren vorteilhaften Ausgestaltung der Erfindung weisen die Signale eine Signalleistung von weniger als 100 mW, insbesondere von weniger als 50 mW auf. Dies ermöglicht besonders klein bauende Steuereinheiten, die im Stand der Technik nicht möglich waren.

Gemäß einer weiteren vorteilhaften Ausgestaltung der Erfindung umfassen die übertragenden Signale jeweils einen Synchronisierungteil und einen Informationsabschnitt. Diese Art der Signalausbildung ermöglicht eine besonders einfache Synchronisation, so daß auch bei großen Verstimmungen der Trägerfrequenzen die Signale sicher als Signale erkannt werden können. Außerdem wird durch das Vorsehen eines separaten Synchronisierungsteils als Bestandteil des Signals die Möglichkeit geschaffen, zur zeitlichen Abstimmung, also zur Phasen-Erkennung, zwischen dem Synchronisierungteil und dem jeweiligen Empfänger eine maximale Korrelation berechnen und ermitteln zu können, und somit eine entsprechende Synchronisierung vornehmen zu können.

Gemäß einer weiteren vorteilhaften Ausgestaltung der Erfindung ist in jeder Steuereinheit ein Symmetriekodegenerator vorgesehen. Diese Ausbildung ermöglicht eine besonders sichere Kodierung und Dekodierung von Signalen, und somit eine besonders sichere Datenübertragung. Insbesondere kann auf diese Weise eine Korrelations-Überprüfung zur Erzielung einer maximalen Korrelation durchgeführt werden.

Gemäß einer weiteren vorteilhaften Ausgestaltung der Erfindung weist jede Steuereinheit eine Zufallsverzögerungseinheit auf. Auf diese Weise kann eine besonders sichere, störunanfällige Datenübertragung erfolgen.

Weitere Vorteile ergeben sich aus den nicht zitierten Unteransprüchen sowie an Hand der nun folgenden Beschreibung eines in den Figuren dargestellten Ausführungsbeispiels. Darin zeigen:

Fig. 1        schematisch eine in einem Gebäude angeordnete Vorrichtung zur Steuerung einer Mehrzahl von Beschattungsanlagen,

Fig. 2a       schematisch einen Antrieb einer Beschattungsanlage sowie eine damit verbundene Steuereinheit,

EP 1 276 250 A2

Fig. 2b     eine gesonderte an die Netz-Spannungsversorgungsleitung angeschlossene Steuereinheit,

Fig. 3     schematisch ein Frequenzspektrum der Spannungsversorgungsleitung während der Signalübertragung einer Vorrichtung des Standes der Technik,

Fig. 4     schematisch ein Frequenzspektrum der Spannungsversorgungsleitung während einer Signalübertragung der erfindungsgemäßen Vorrichtung,

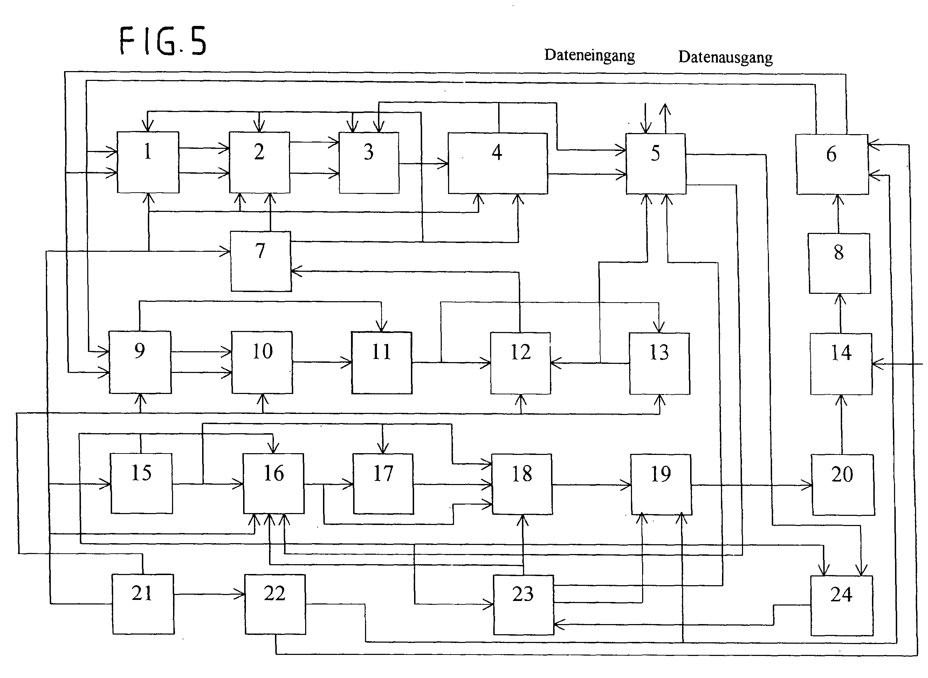

Fig. 5     einen Übersichtsschaltplan der Vorrichtung zum Empfang und zur Übertragung von phasenmanipulierten Kodesignalen;

Fig. 6     Schaltpläne, die den Betrieb eines Symmetriekodegenerators, einer Vertauschungseinheit, eines Logikumsetzers, einer Kommutationseinheit und eines Steuersignalerzeugers darstellen;

Fig. 7     Schaltpläne, die den Betrieb einer Eingabe-Ausgabe-Einheit darstellen;

Fig. 8     Schaltpläne, die den Betrieb einer Zufallsverzögerungseinheit darstellen;

Fig. 9     Schaltpläne, die den Betrieb inkohärenter abgestimmter Filter für Symmetriekodes und für logisch umgeformte Kodes sowie der Summier einrichtung darstellen;

Fig. 10     Schaltpläne, die den Betrieb eines inkohärenten Mehrkanalkorrelators und eines Mehrkanalspeichers darstellen;

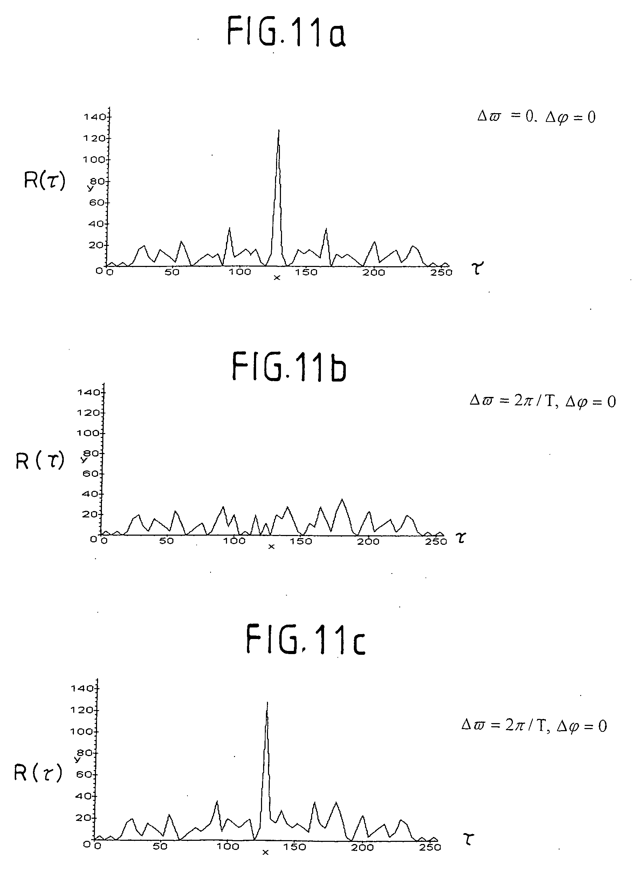

Fig. 11a-11g     Korrelationsfunktionen, die den Effekt einer Verwendung einer segmentangepaßten modularen Verarbeitung eines komplizierten zusammengesetzten segmentsymmetrischen Signals bei Verstimmungen der Trägerfrequenzen erläutern

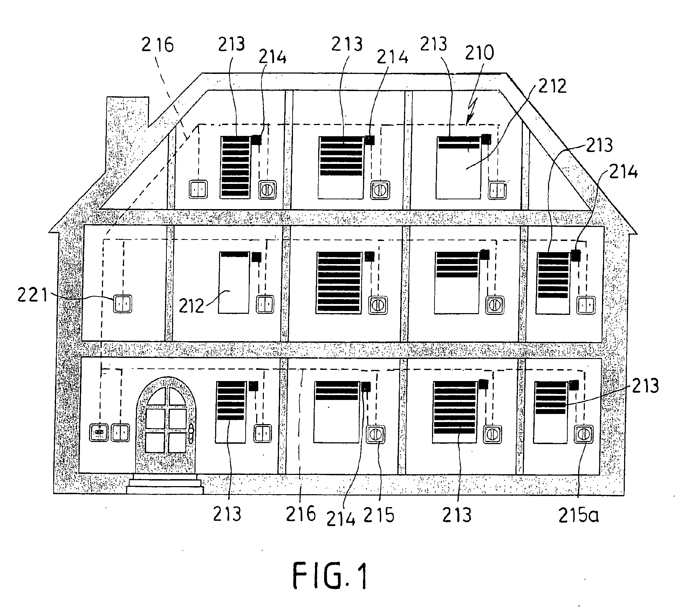

Die in ihrer Gesamtheit mit 210 bezeichnete Vorrichtung soll in der Übersicht zunächst an Hand der Fig. 1 erläutert werden:

In einem mehretagigen Gebäude 211 ist zur Verdunkelung von Fenstern 212 jeweils eine Beschattungsanlage 213 vorgesehen, die beim Ausführungsbeispiel als Rolladen-Jalousie ausgebildet ist. Jeder Beschattungsanlage 213 ist ein gesonderter Antrieb 214, typischerweise ein Elektromotor, zugeordnet. Der Antrieb 214 ist unter Zwischenschaltung einer Steuereinheit 215 an eine Netz-Spannungsversorgungsleitung 216 angeschlossen. Die Netz-Spannungs-Versorgungsleitung 216 durchläuft das gesamte Gebäude 211 und somit auch die unterschiedlichen Etagen. Über die Netz-Spannungsversorgungsleitung 216 sind also sämtliche Steuereinheiten 215 miteinander verbunden.

Mit der erfindungsgemäßen Vorrichtung 210 ist es nunmehr möglich, beispielsweise von der in Fig. 1 rechten unteren Steuereinheit 215a sämtliche Beschattungsanlagen 213 der untersten Etage des Gebäudes 211 anzusteuern. Es kann dabei auch vorgesehen sein, die Beschattungsanlagen 213 der untersten Etage des Gebäudes 211 zu einer Gruppe zusammenzufassen.

Grundsätzlich ist es aber auch möglich, von der Steuereinheit 215a aus die Beschattungsanlagen 213 der obersten Etage anzusteuern.

Die zu übertragenden Steuer- und/oder Statusinformationen enthalten dazu Informationen über den Adressaten, also über die entsprechende, einer bestimmten Beschattungsanlage 213 zugeordnete Steuereinheit 215. Dabei ist es möglich, die Steuereinheiten 215 auf einfache Weise zu Gruppen zusammenzufassen, so daß mehrere Beschattungselemente 213, die einer.gemeinsamen Gruppe angehören, nahezu zeitgleich angesteuert werden können.

Außerdem kann es vorgesehen sein, daß von einer bestimmten Steuereinheit 215 auch Statusinformationen über den aktuellen Status der dieser Steuereinheit 215 zugeordneten Beschattungsanlage 213 übermittelt werden. Die Signalübertragung ist insoweit bidirektional. Als Statusinformationen können beispielsweise Informationen wie "Rollade geschlossen" oder "Rollade offen" übermittelt werden.

Dem Benutzer, der die Steuereinheit 215a in der untersten Etage des Gebäudes 211 bedient, und eine Beschattungsanlage 213 der obersten Etage des Gebäudes ansteuern möchte, kann insofern Statusinformationen über eine bestimmte entfernte Beschattungsanlage 213 in der obersten Etage des Gebäudes 211 auf einfache Weise erhalten.

Erfindungsgemäß kann es auch vorgesehen sein, ein bestimmtes Beschattungselement 213 zugleich unterschiedlichen Gruppen zuzuordnen.

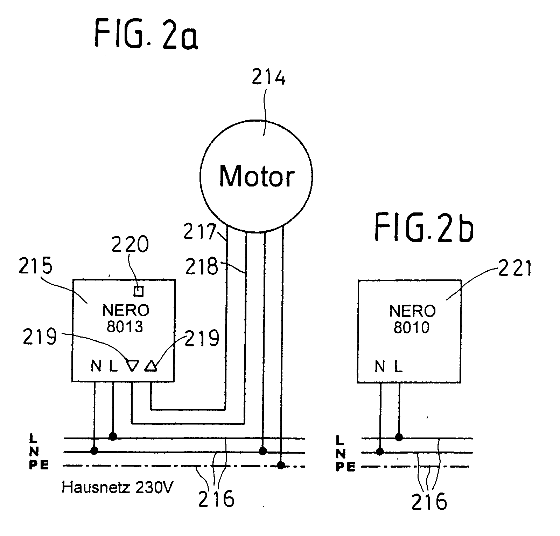

Fig. 2a zeigt schematisch die Anbindung eines Antriebs 214 an die Netzspannungsversorgungsleitung 116. Der Motor ist unmittelbar lediglich mit den N- und PE-Leitern der Netz-Spannungsversorgungsleitung 216 verbunden.

Zwei weitere Leitungen 217, 218 führen von dem Antriebsmotor 214 zu der Steuereinheit 215. Die Steuereinheit 215 ist ihrerseits wiederum mit der Netz-Spannungsversorgungsleitung 216 verbunden, hier jedoch mit den L- und N-Leitern der Netz-Spannungsversorgungsleitung 216.

An der Steuereinheit 215 sind Betätigungselemente 219 angeordnet, die gemäß Fig. 2a lediglich schematisch als richtungspfeilartige Dreiecke dargestellt sind. Das bezüglich Fig. 2 rechte Dreieck soll eine Auf-Bewegung einer Rollade und das auf dem Kopf stehende Dreieck eine Abwärtsbewegung der Rollade verdeutlichen. Auf diese Weise kann ein Benutzer beispielsweise durch einmaliges Drücken des bezüglich Fig. 2a rechten Betätigungselementes 219 eine in geschlossener Stellung befindliche Rollade öffnen.

Ein zusätzliches, lediglich schematisch dargestelltes Anzeigeelement 220 ist an der Steuereinheit 215 vorgesehen und kann bestimmte Informationen oder Teilinformationen anzeigen. Beispielsweise kann das Anzeigeelement nach Art einer LED ausgebildet sein.

Durch eine bestimmte Folge von Betätigungen der Betätigungselemente 219 kann nicht nur der dieser Steuereinheit 215 zugeordnete Antrieb 214 angesprochen werden, sondern jeder an die Vorrichtung 210 angeschlossene Motor 214. Hierzu sind die Signale an jede weitere an die Vorrichtung 210 angeschlossene Steuereinheit 215 übertragbar.

Fig. 2b zeigt eine weitere Steuereinheit 221, der kein gesonderter Antrieb zugeordnet ist. Eine derartige Steuereinheit 221 kann an einer beliebigen Stelle im Gebäude 211 angeordnet sein und bietet die Möglichkeit, Steuerinformationen einzugeben und an jedes beliebige weitere Steuergerät 215 zu versenden. Die Steuereinheit 221 ist dabei keine Zentrale, sondern stellt lediglich ein zusätzliches Bedienelement dar.

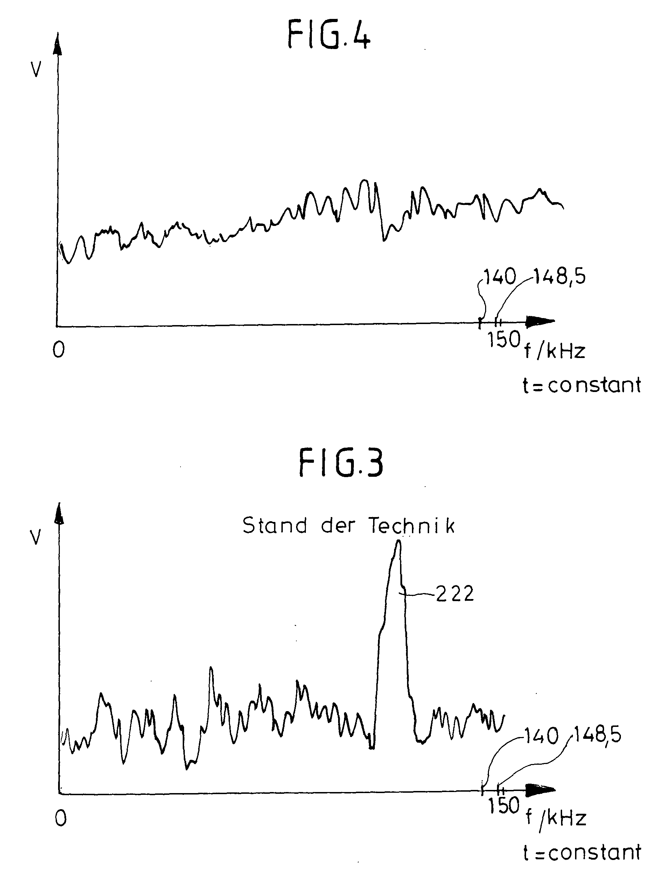

Die Fig. 3 und 4 zeigen zu einem bestimmten Zeitpunkt das an der Netz-Spannungsversorgungsleitung anliegende Frequenzspektrum während einer Signalübertragung bei einer Vorrichtung des Standes der Technik und der erfindungsgemäßen Vorrichtung. Beide Kurven zeigen über den gesamten, hier relevanten Frequenzbereich zwischen 0 und 150 kHz ein verhältnismäßig deutliches Rauschen. Insbesondere wird deutlich, daß beim Stand der Technik ein weit über das Rauschniveau herausragender Peak 222 vorgesehen ist, der das zu übertragende Signal enthält.

Eine Frequenzaufnahme der erfindungsgemäßen Vorrichtung (lediglich schematisch) zeigt, daß im relevanten Frequenzbereich von 140 bis 148,5 kHz derartige, peakartige hohe Signalintensitäten nicht vorhanden sind. Da das Signal erfindungsgemäß über einen verhältnismäßig langen Zeitraum von etwa 200 ms übertragen wird, besteht auch bei großen Störungen eine sehr hohe Übertragungssicherheit.

Grundsätzlich kann es auch vorgesehen sein, die Vorrichtung zur Steuerung einer Mehrzahl von Beschattungsanlagen mit weiteren elektrischen Teilnehmern auszustatten. Beispielsweise können Sensoren nach Art von Rauchmeldern vorgesehen sein, Steuereinheiten, die Rolltore von Garagen steuern oder andere elektrische Teilnehmer, wie Steuereinheiten für Dimmer für Beleuchtungselemente etc.

Der Synchronisierungs-Teil des aus einem Synchronisierungteil und einem Informationsteil bestehenden Signals kann beispielsweise 64 Bit-lang ausgebildet sein. Zur Synchronisierung wird das erhaltene Signal mit einem in jeder Steuereinheit gespeicherten Registerwert verglichen. Auf Grund von Wahrscheinlichkeitsberechnungen steht fest, daß mit einer nahezu hundertprozentigen Wahrscheinlichkeit auf Grund von in den Frequenzbandbereich von 140 bis 148,5 kHz vorhandenen üblichen Störungen mindestens 44 der 64 gesendeten Bits unverfälscht, also richtig ankommen. Somit kann eine Abgleichung vorgenommen werden, die nach Art einer maximalen Korrelations-Suche eine Synchronisierung des erhaltenen Signals ermöglicht. Durch verschiedene mathematische Methoden, Kodierungen und Dekodierungen, kann anschließend nach Ausrechnung eines Schwellwertes (Trashholds) und somit einer Synchronisierung auch der Informationsanteil des Signals dekodiert werden.

Auch der Informationsanteil des Signals kann anschließend durch verschiedene Kodierungen und Dekodierungen derart rekonstruiert werden, daß die Informationen erhalten werden. Eine Gesamtinformation kann auf diese Weise rekonstruiert oder wieder hergestellt werden.

Im folgenden wird ein neuer Transceiver für ein System zur Informationsübertragung durch rauschähnliche Orthogonalkodes mit phasenmanipulierter Modulation der Trägerfrequenz beschrieben, welcher zum Datenempfang und zur Datenübertragung durch ein Spannungsversorgungsnetz verwendet wird.

Bekannt ist eine Vorrichtung zur Informationsaufnahme und -übertragung durch ein Spannungsversorgungsnetz, die einen Pseudozufallsfolgegenerator, einen Breitbandmodulator und -demodulator, Verstärker und ein Anpaßgerät (oder Ankopplungsgerät) zur Kopplung an das Spannungsversorgungsnetz, und eine Synchronisiereinheit des Pseudozufallfolgegenerators zur Synchronisierung durch die Signale des Elektroenergienetzes aufweist (s. US 48 64 589, Kl. H 04 L 27/30).

Diese Vorrichtung weist aber eine geringe Synchronisationsgenauigkeit auf und erweist sich beim Ausfall des Wechselspannungssignals des Elektroenergienetzes als arbeitsunfähig.

Bekannt sind auch ein Verfahren und eine Apparatur zur inkohärenten korrelativen Parallelverarbeitung von komplizierten Breitbandsignalen, die zwei Kanäle zur Synchron- und Quadraturverarbeitung aufweist, wobei jeder der Kanäle einen Multiplizierer, ein Filter, und ein abgestimmtes Filter für zwei Kodes reihengeschaltet aufweist und wobei die Ausgänge des abgestimmtes Filters des Gleichphasenkanals mit den jeweiligen Ausgängen des abgestimmten Filters des Quadraturkanals mit Hilfe von Summiereinrichtungen summiert werden, deren Ausgänge mit dem Eingang eines Normalisators durch nichtlineare Elemente und durch eine gesonderte Summiereinrichtung verbunden sind (s. US 59 63 586, Kl. H 04 B 1/707). Bei der Aufnahme einer zusammengesetzten Synchronisierfolge weist die Vorrichtung einen großen Wert des Antwortverhaltens der Nebenkeule der Korrelationsfunktion auf, was die Genauigkeit der Schätzung der Synchrosignalverzögerung vermindert. Bei der Aufnahme eines Informationsmoduliersignals werden das Verfahren und die Apparatur durch eine niedrige Informationsgeschwindigkeit charakterisiert und sind auch im Asynchronbetrieb der Signalübertragung, die durch mehrere in einem Kanal arbeitende Sendeempfänger ausgeführt wird, vor Interferenzen nicht geschützt.

Der Ausgangspunkt für den neuen Transceiver ist eine Vorrichtung zur Aufnahme und zur Übertragung von phasenmanipulierten Kodesignalen gemäß US 49 79 183. Wie sich insbesondere aus der Fig.2 der Druckschrift ergibt, besitzt die bekannte Vorrichtung bereits einen Phasenmodulator (BPSK-Modulator 29), einen Verstärker (Power-Implifier 28), ein Anpaßgerät (Coupling network), eine binäre Quantisierungseinrichtung (vereinfacht ausgedrückt: ein Analog-Digital-Wandler, gemäß Fig. 2 ein limiting emplifier 53), eine inkoharente Demodulatoreneinheit (inphase detector 61 sowie quad detector 62), die in Reihe geschaltet sind, einen Impulsgenerator (dies ist die Gesamtheit der Bauelemente carrier frequency divider 32 und clock generator 24) sowie einen Phasenschieber (Quadraturgenerator 63), die in Reihe geschaltet sind. Die Synchron- und Quadraturausgänge des Phasenschiebers sind an die jeweiligen Eingänge der inkohärenten Demodulatoreneinheit angeschlossen, wobei der Synchronausgang des Phasenschiebers mit dem Eingang des Phasenmodulators und der zweite Ausgang des Impulsgenerators mit den Eingängen eines inkohärenten Korrelators (dieser besteht aus einem Inphase-Korrelator 78 und einem Quad-Korrelator 79) durch einen Referenzsignalgenerator (pseudo noise generator 39) verbunden sind, und wobei der zweite Ausgang des Referenzsignalgenerators mit dem Eingang einer Beschlußfassungseinheit (track logic and data recovery 31) und die Ausgänge der Beschlußfassungseinheit mit den Eingängen der einen Eingang und einen Ausgang zur Dateneingabe und -ausgabe aufweisenden Eingabe-Ausgabe-Einheit (try state driver 18 sowie data Leitung 68) verbunden sind, und wobei das Anpaßgerät mit einem Kanal zur Übertragung eines phasenmanipulierten Signals durch einen gesonderten Eingang-Ausgang verbunden ist. Die soeben beschriebenen Verbindungen sind jedoch lediglich mittelbarer Art. Der in der dortigen Figur 2 dargestellte Korrelator Inphase-Korrelator 78 und Quad-Korrelator 79) fungiert hier lediglich als Ein-Kanal-Korrelator.

Diese der nachfolgend beschriebenen Vorrichtung am nächsten kommende Vorrichtung bietet keine Möglichkeit, in den Übergabe- und Aufnahmestellen eine hohe Zuverlässigkeit bei der Aufnahme von phasenkodierten längeren Signalen bei Verstimmungen der Trägerfrequenzen der Sender-Empfänger-Bauteile zu gewährleisten, die die durch das Kohärenzintervall des Synchronisierfolge und des Blockkodes festgelegten Werte überschreiten.

Diese am nächsten kommende Vorrichtung ist vor einer Verzerrung (d.h. vor einer zeitlichen Überlagerung der durch verschiedene Sendeempfänger übertragenden Signale) im Asynchronbetrieb der Signalübertragung, die durch mehrere in einem Kanal arbeitende Sendeempfänger erfolgt, nicht geschützt.

Die nachfolgend beschriebene, neue Vorrichtung zum Empfang und zur Übertragung von rauschartig ausgebildeten Signalen bietet die Möglichkeit, im Asynchronbetrieb der Signalübertragung, die durch mehrere in einem Kanal arbeitende Sendeempfänger erfolgt, phasenkodierte lange Signale zu formieren und diese auch bei wesentlichen Verstimmungen der Trägerfrequenzen der Sendeempfänger in den Übergabe/Aufnahmestellen wirkungsvoll zu verarbeiten.

Die neue Vorrichtung zum Empfang und zur Übertragung von phasenmanipulierten Kodesignalen umfaßt einen Phasenmodulator, einen Verstärker, ein Anpaßgerät, eine binäre Quantisierungseinrichtung, eine inkohärente Demodulatoreneinheit, die in Reihe geschaltet sind, einen Impulsgenerator und einen Phasenschieber, die in Reihe geschaltet sind, wobei die Synchronund Quadraturausgänge des Phasenschiebers mit den jeweiligen Eingängen der inkohärenten Demodulatoreneinheit und der Synchronausgang des Phasenschiebers mit dem Eingang des Phasenmodulators verbunden sind, und wobei der zweite Ausgang des Impulsgenerators mit den Eingängen eines inkohärenten Mehrkanalkorrelators über einen Referenzsignalgenerator verbunden ist, und wobei der zweite Ausgang des Referenzsignalgenerators an den Eingang der Beschlußfassungseinheit und die Ausgänge der Beschlußfassungseinheit an die Eingänge der einen Eingang und einen Ausgang zur Dateneingabe und -ausgabe aufweisenden Eingabe-Ausgabe-Einheit angeschlossen sind, und wobei das Anpaßgerät durch einen gesonderten Eingang-Ausgang mit einem Kanal (also der Netzspannung-Versorgungs-Leitung) zur Übertragung eines phasenmanipulierten Signals verbunden ist, und umfaßt zusätzlich einen Symmetriekodegenerator, eine Vertauschungseinheit, einen Logikumsetzer, eine Kommutationseinheit, die in Reihe geschaltet sind, wobei der Ausgang der Kommutationseinheit mit dem zweiten Eingang des Phasenmodulators und der Ausgang des Symmetriekodegenerators mit den zweiten Eingängen jeweils des Logikumsetzers und der Kommutationseinheit verbunden sind, und wobei der dritte Eingang der Kommutationseinheit an den Ausgang der Vertauschungseinheit und der zweite Ausgang des Symmetriekodegenerators an den zweiten Eingang der Vertauschungseinheit, den Eingang einer Zufallsverzögerungseinheit und den Eingang eines Steuersignalerzeugers angeschlossen sind, und wobei einer der Ausgänge des Steuersignalerzeugers mit dem dritten Eingang der Eingabe-Ausgabe-Einheit, und der zweite Ausgang des Steuersignalerzeugers mit dem vierten Eingang der Kommutationseinheit und dem dritten Eingang der Vertauschungseinheit verbunden sind, und wobei der vierte Eingang der Vertauschungseinheit mit einem gesonderten Ausgang der Eingabe-Ausgabe-Einheit, und der zusätzliche Ausgang der Eingabe-Ausgabe-Einheit mit dem zweiten Eingang der Zufallverzögerungseinheit, und der Ausgang der Zufallsverzögerungseinheit mit dem zweiten Eingang des Steuersignalerzeugers verbanden sind, und wobei die Gleichphasen- und Quadraturausgänge der inkohärenten Demodulatoreneinheit mit den Gleichphasen- und Quadratureingängen der Rückvertauschungseinheit verbunden und durch ein inkohärentes abgestimmtes Filter des logisch umgeformten Kodes an die Synchron- und Quadratureingänge des inkohärenten Symmetriekode-Anpaßfilter abgestimmter Filters angeschlossen sind, und wobei der Ausgang des Symmetriekode-Anpaßfilter (abgestimmtes Filter) über eine Summiereinrichtung an den Eingang einer Differenziereinheit, und der gesonderte Ausgang des inkohärenten abgestimmten Filters für logisch umgeformten Kode an den zweiten Eingang der Summiereinrichtung angeschlossen sind, und wobei der zweite Ausgang des Impulserzeugers mit den Synchronisiereingängen jeweils des inkohärenten abgestimmten Filters für logisch umgeformten Kode, des inkohärenten Symmetriekode-Anpaßfilter, der Differenziereinheit und der Schwellenwerteinheit verbunden ist, und wobei der Ausgang der Schwellenwerteinheit an den vierten Eingang der Eingabe-Ausgabe-Einheit und durch die Differenziereinheit an den Eingang des Referenzsignalerzeugers angeschlossen ist, und wobei der Synchronisiereingang des inkohärenten Mehrkanalkorrelators mit den Synchronisiereingängen jeweils der Rückvertauschungseinheit, des Symmetriekodegenerators, der Vertauschungseinheit, der Beschlußfassungseinheit verbunden und an den zweiten Ausgang des Impulserzeugers angeschlossen ist, und wobei der Ausgang der Summiereinrichtung mit dem zweiten Eingang der Schwellenwerteinheit, und die Ausgänge der Rückvertauschungseinheit über den inkohärenten Mehrkanalkorrelator und den Mehrkanalspeicher, die in Reihe geschaltet sind, mit dem zweiten Eingang der Beschlußfassungseinheit verbunden sind, und wobei der zweite Ausgang der Beschlußfassungseinheit mit dem gesonderten Eingang des Mehrkanalspeichers verbunden ist, und wobei der Zusatzeingang des Mehrkanalspeichers mit den Zusatzeingängen der Rückvertauschungseinheit und des inkohärenten Mehrkanalkorrelators verbunden und an den zweiten Ausgang des Referenzsignalerzeugers angeschlossen ist, und wobei der dritte Ausgang des Steuersignalerzeugers mit dem dritten Eingang des Phasenmodulators verbunden ist.

Die neuen Einheiten und Verbindungen bieten die Möglichkeit, im Asynchronbetrieb der Signalübertragung, die durch mehrere in einem Kanal arbeitende Sendeempfänger erfolgt, ein segmentsymmetrisches synchronisiertes und blockkodiertes phasenmanipuliertes Signal zu formieren und im Empfangsbetrieb durch die Schätzung einer Verzögerung des zu empfangenden Synchronsignals durch ein der Summe der Segmentmodule angepaßter Filter eine genaue Blocksynchronisierung und bei wesentlichen Verstimmungen der Trägerfrequenzen in Übertragung-Aufnahme-Stellen eine segmentmodulare korrelative Mehrkanaldekodierung der Blockkodessignale durchzuführen sowie die Einwirkung von Interferenzen von Signalen eines Sendeempfängers mit den Signalen anderer in diesem Kanal arbeitender Sendeempfänger zu vermindern.

Die Vorrichtung zum Empfang und zur Übertragung von phasenmanipulierten Kodesignalen umfaßt einen Phasenmodulator 19, einen Verstärker 20, ein Anpaßgerät 14, eine binäre Quantisierungseinrichtung 8, und eine inkohärente Demodulatoreneinheit 6, die in Reihe geschaltet sind, einen Impulsgenerator 21 und einen Phasenschieber 22, die in Reihe geschaltet sind, wobei die Synchron- und Quadraturausgänge des Phasenschiebers 22 mit den jeweiligen Eingängen der inkohärenten Demodulatoreneinheit 6 verbunden sind. Der Synchronausgang des Phasenschiebers 22 ist mit dem Eingang des Phasenmodulators 19 und der zweite Ausgang des Impulsgenerators 21 über einen Referenzsignalgenerator 7 mit den Eingängen eines inkohärenten Mehrkanalkorrelators 2 verbunden, und der zweite Ausgang des Referenzsignalsgenerators 7 ist an den Eingang der Beschlußfassungseinheit 4 angeschlossen, wobei die Ausgänge der Beschlußfassungseinheit 4 mit den Eingängen der einen Eingang und einen Ausgang zur Dateneingabe und -ausgabe aufweisenden Eingabe-Ausgabe-Einheit 5 verbunden sind. Die Eingabe/Ausgabeeinheit 5 entspricht dabei den Betätigungselementen 219 der Fig. 2a, wobei mit dem Begriff Eingabe-/Ausgabeeinheit 5 ganz allgemein derjenige Teil der Vorrichtung gemeint ist, mittels dem Steuerinformationen eingegeben werden können oder für einen Benutzer sichtbar gemacht werden können.

Das Anpaßgerät 14 ist durch eine gesonderte Eingang-Ausgang-Schnittstelle mit einem Kanal zur Übertragung eines phasenmanipulierten Signals verbunden. Der Kanal entspricht dabei der Spannungsversorgungsleitung 216 der Fig. 1.

Ein Symmetriekodegenerator 15, eine Vertauschungseinheit 16, ein Logikumsetzer 17, eine Kommutationseinheit 18 sind in Reihe geschaltet, wobei der Ausgang der Kommutationseinheit 18 mit dem zweiten Eingang des Phasenmodulators 19 verbunden ist. Der Ausgang der Symmetriekodegenerators 15 ist mit den zweiten Eingängen jeweils des Logikumsetzers 17 und der Kommutationseinheit 18 verbunden, und der dritte Eingang der Kommutationseinheit 18 ist mit dem Ausgang der Vertauschungseinheit 16 verbunden. Der zweite Ausgang des Symmetriekodegenerators 15 ist mit dem zweiten Eingang der Vertauschungseinheit 16, dem Eingang einer Zufallsverzögerungseinheit 24 und dem Eingang eines Steuersignalerzeugers 23 verbunden, und einer der Ausgänge des Steuersignalerzeugers 23 ist mit dem dritten Eingang der Eingabe-Ausgabe-Einheit 5 verbunden. Der zweite Ausgang des Steuersignalerzeugers 23 ist mit dem vierten Eingang der Kommutationseinheit 18 und dem dritten Eingang des Vertauschungseinheit 16 verbunden, und der vierte Eingang des Vertauschungseinheit ist mit einem gesonderten Ausgang der Eingabe-Ausgabe-Einheit 5 verbunden, deren zusätzlicher Ausgang an den zweiten Eingang der Zufallsverzögerungseinheit 24 angeschlossen ist, und der Ausgang der Zufallsverzögerungseinheit 24 ist mit dem zweiten Eingang des Steuersignalerzeugers 23 verbunden. Die Gleichphasen- und Quadraturausgänge der inkohärenten Demodulatoreneinheit 6 sind mit den Gleichphasen- und Quadratureingängen einer Rückvertauschungseinheit 1 und über einen inkohärenten abgestimmten Filter 9 für logisch umgeformten Kode mit den Synchron- und Quadratureingängen eines inkohärenten Symmetriekode abgestimmten Filters 10 verbunden, und der Ausgang des inkohärenten Symmetriekode-Anpaßfilter abgestimmten Filters 10 ist über eine Summiereinrichtung 11 mit dem Eingang einer Differenziereinheit 12 und der gesonderte Ausgang des inkohärenten abgestimmten Filters 9 für logisch umgeformten Kode mit dem zweiten Eingang der Summiereinrichtung 11 verbunden. Der zweite Ausgang des Impulserzeugers 21 ist mit den Synchronisiereingängen jeweils des inkohärenten abgestimmten Filters für logisch umgeformten Kode 9, des inkohärenten Symmetriekode-Anpaßfilter 11, der Differenziereinheit 12 und der Schwellenwerteinheit 13 verbunden, und der Ausgang der Schwellenwerteinheit 13 ist mit dem vierten Eingang der Eingabe-Ausgäbe-Einheit 5 und über die Differenziereinheit 12 mit dem Eingang des Referenzsignalserzeugers 7 verbunden. Der Synchronisiereingang des inkohärenten Mehrkanalkorrelators 2 ist mit den Synchronisiereingängen jeweils der Rückvertauschungseinheit 1, des Symmetriekodegenerators 15, der Vertauschungseinheit 16, der Beschlußfassungseinheit 4 verbunden und an den zweiten Ausgang des Impulserzeugers 21 angeschlossen. Der Ausgang der Summiereinrichtung 11 ist an den zweiten Eingang der Schwellenwerteinheit 13 angeschlossen. Die Ausgänge der Rückvertauschungseinheit 1 sind durch den inkohärenten Mehrkanalkorrelator 2 und den Mehrkanal Speicher 3, die in Reihe geschaltet sind, mit dem zweiten Eingang der Beschlußfassungseinheit 4 verbunden, und der zweite Ausgang der Beschlußfassungseinheit 4 ist mit dem gesonderten Eingang des Mehrkanalspeichers 3, und der Zusatzeingang des Mehrkanalspeichers 3 ist mit den Zusatzeingängen der Rückvertauschungseinheit 1 und des inkohärenten Mehrkanalkorrelators 2 und mit dem zweiten Ausgang des Referenzsignalerzeugers 7 verbunden. Der dritte Ausgang des Steuersignalerzeugers 23 ist an den dritten Eingang des Phasenmodulators 19 angeschlossen.

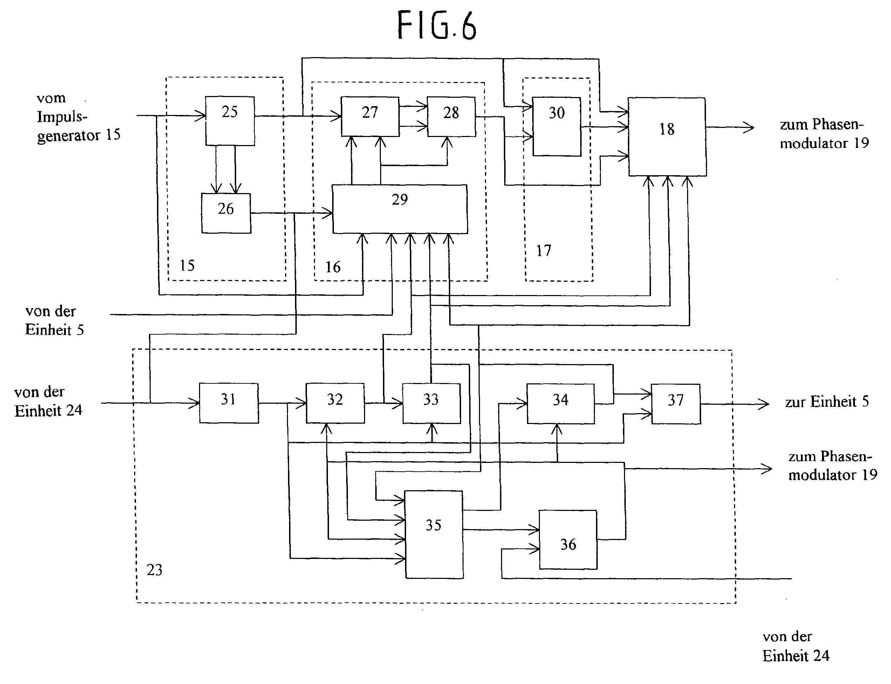

Fig. 6: Der Symmetriekodegenerator 15 besteht aus einem Pseudozufallskodegenerator 25, der eine symmetrische (d.h. eine gleiche Anzahl von logischen Nullen und Einsen aufweisende) Pseudozufallsfolge formiert, und einem Dekoder 26, an dessem Ausgang ein Impuls entsteht, dessen Periode der Pseudozufallsfolgeperiode gleich ist.

Die Vertauschungseinheit 16 führt eine Vertauschung der durch den Generator 15 gebildeten Symmetriekodesymbole aus und besteht aus einer Operativspeichereinheit 27, einem Kommutator 28 und einem Lese- und Schreibsignal-Generator 29.

Der Logikumsetzer 17 führt eine Umsetzung der Symbole an den Ausgängen des Symmetriekodegenerators 15 und der Vertauschungseinheit 16 nach den Regeln der Booleschen Algebra aus. Als solche Umsetzung kann, z. B., die Summierungsoperation nach dem Modul "zwei" gewählt werden, die durch eine Summiereinrichtung 30 nach dem Modul "zwei" ausgeführt wird.

Der Steuersignalerzeuger 23 formiert den Steuerkode für die Kommutationseinheit 18 und den in der Vertauschungseinheit 16 angeordneten Leseund Schreibsignal-Generator 29. Der Steuersignalerzeuger 23 besteht aus einem Teiler 31, einem Erzeuger der Zeitintervalle des Synchronsignals 32, einem Erzeuger der Zeitintervalle des Frames, logischen UND-Schaltungen 33 und 37, einer Dekodereinheit 35, und einem Flipflop 36.

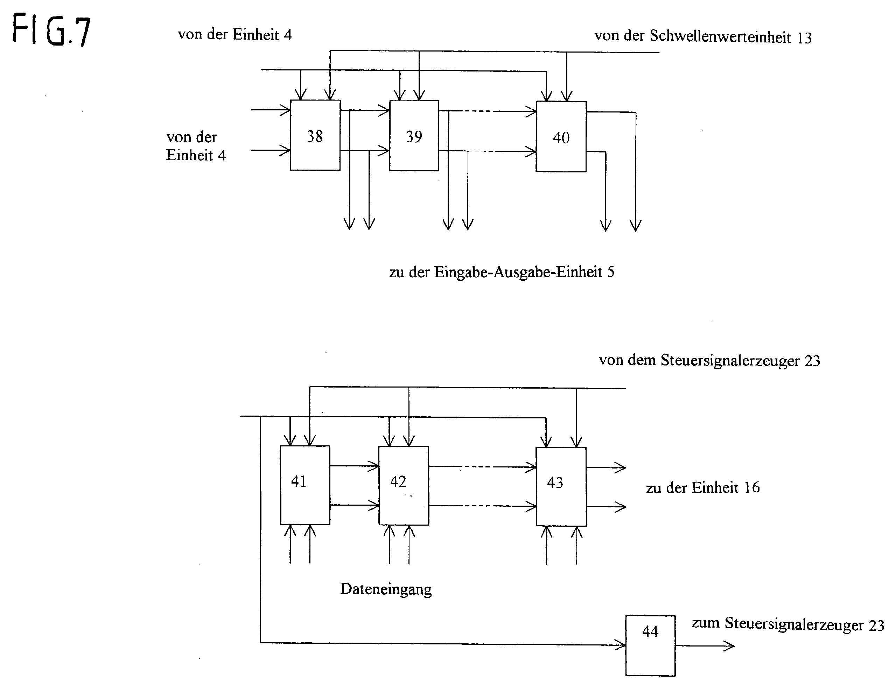

Fig. 7: Die Eingabe-Ausgabe-Einheit 5 besteht aus einem Differentiator 44 sowie aus in Reihe geschalteten Schieberegistern 38, 39, 40 und in Reihe geschalteten Schieberegister 41, 42, 43, die die Binärziffern der zu übertragenden und aufzunehmenden Information schreiben, verschieben und speichern. Eine der Komponenten der Information ist das Übertragungsbetriebs-Bit, das an dem Eingang des Differentiators 44 und an den Einstelleingängen der Schieberegister 41, 42, 43 ankommt.

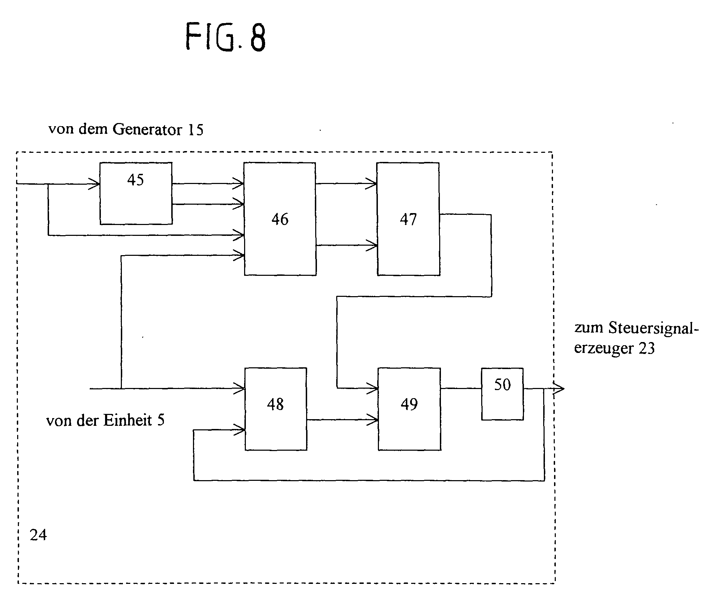

Fig. 8: Die Zufallsverzögerungseinheit 24 besteht aus einem Zufallsgenerator 45, einem Zähler 46, einem Dekoder 47, einem RS-Flipflop, einem D-Flipflop, einem Differentiator 50. Die Einheit 24 führt eine Verzögerung auf eine Impulszufallsgröße von dem entsprechenden Ausgang der Eingabe-Ausgabe-Einheit 5 aus.

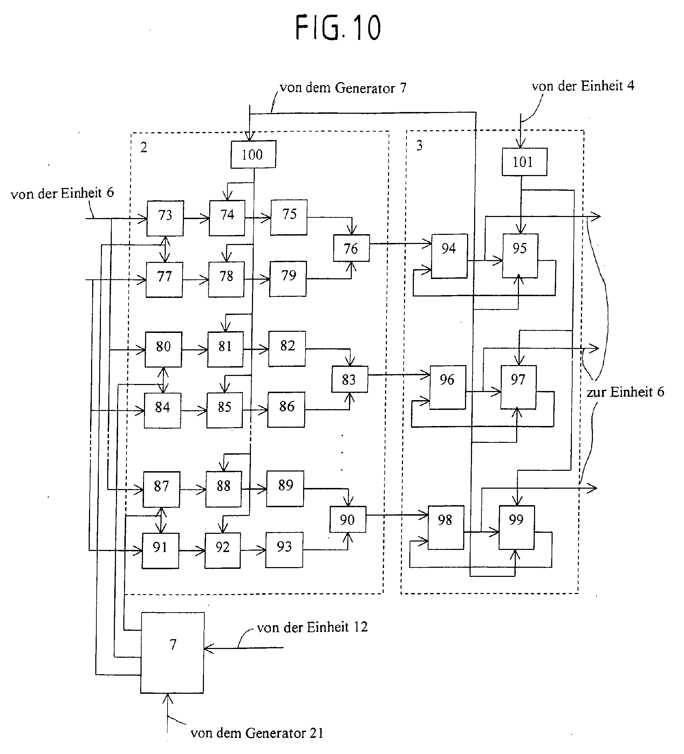

Fig. 10: Der inkohärente Mehrkanalkorrelator 2 führt eine korrelative Mehrkanalverarbeitung der Segmente der Gleichphasen- und Quadraturkomponente der demodulierten Schichten des Blockkodes mit einer unbekannten Anfangsphase der Trägerschwingung aus.

Der inkohärente Mehrkanalkorrelator 2 weist Multiplizierer 73, 77, 80, 84, 87, 91, Summiereinrichtungen 74, 78, 81, 85, 88, 92, Summenmodul-Recheneinheiten 75, 79, 82, 86, 89, 93, Summiereinrichtungen 76, 83, 90 auf. Die Einstelleingänge der Summiereinrichtungen 74, 78, 81, 85, 88, 92 sind miteinander verbunden und durch ein Verzögerungselement 100 an den Ausgang des Generators 7 angeschlossen. Die die Aufzeichnung der Register 95, 97, 99 kontrollierenden Eingänge sind miteinander verbunden und an den Ausgang des Generators 7 angeschlossen. Die einen Eingänge der Multiplizierer 73, 77, 80, 84, 87, 91 sind mit den Ausgängen des Referenzsignalgenerators 7 und die anderen Eingänge der Multiplizierer 73, 80, 87 mit dem Ausgang der Synchronkomponente der inkohärenten Demodulatoreneinheit 6 verbunden. Die anderen Eingänge der Multiplizierer 77, 84, 91 sind an den Ausgang der Quadraturkomponente der inkohärenten Demodulatoreneinheit 6 angeschlossen.

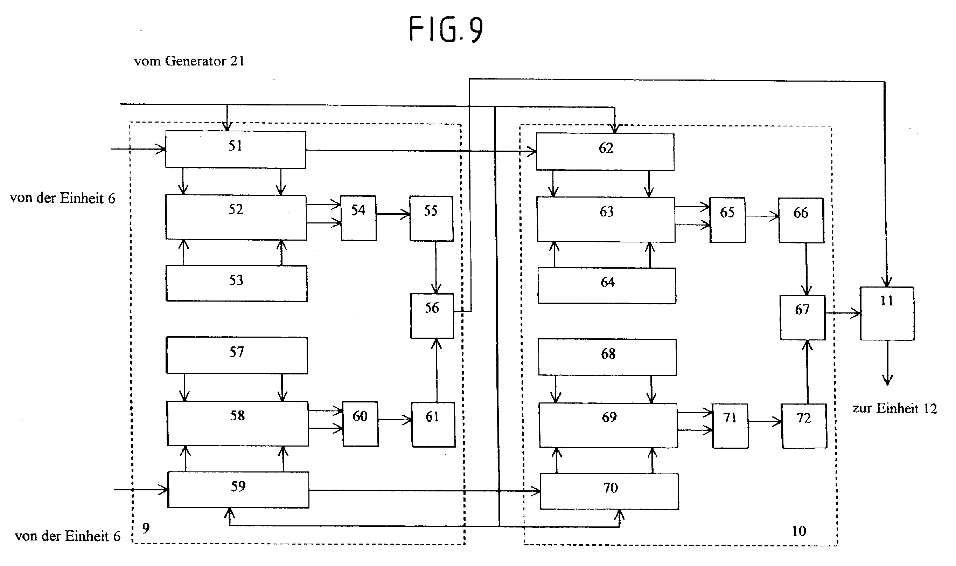

Fig. 9: Die inkohärenten abgestimmten Filter 9 und 10 weisen eine typengleiche Struktur auf, aber sind auf verschiedene Formen der Kodefolgen eingestellt und führen eine Quadratur-Anpaß-Filterung der Segmente der aufzunehmenden Syncrofolge mit einer unbekannten Anfangsphase der Trägerschwingung aus. Jeder der inkohärenten abgestimmten Filter 9 und 10 weist Schieberegister 51, 62, 59, 70, Speicherregister 53, 57, 64, 68, Summatoreneinheiten nach dem Modul "zwei" 52, 58, 63, 69, Summiereinrichtungen 54, 60, 65, 71, Summenmodul-Recheneinheiten 55, 61, 66, 72, Summiereinrichtungen 56 und 67 auf. Der Eingang des Schieberegisters 51 ist mit dem Ausgang der Gleichphasenkomponente der inkohärenten Demodulatoreneinheit 6 und der Eingang des Registers 59 mit dem Ausgang der Quadraturkomponente der inkohärenten Demodulatoreneinheit 6 verbunden. Die Synchronisiereingänge der Register 51, 62, 59, 70 sind mit dem Ausgang des Impulserzeugers 21 verbunden.

Fig. 10: Der Mehrkanalspeicher 3 weist Speicher, und jeder dieser Speicher weist in Reihe geschaltete Summiereinrichtungen 94, 96, 98 und Speicherregister 95, 97, 99 auf, deren Einstelleingänge mit dem Ausgang der Beschlußfassungseinheit 4 verbunden sind.

Im folgenden wird die Betriebsweise der neuen Vorrichtung beschrieben. Zwei Betriebe sind möglich: der Übertragungs- und der Empfangsbetrieb.

Der Wechsel in die eine oder die andere Betriebsart hängt vom Wert des Übertragungsbetriebs-Bit am Eingang der Eingabe-Ausgabe-Einheit 5. Falls das Bit des Übertragungsbetriebs "1" ist, so gibt die Vorrichtung die Daten in die Eingabe-Ausgabe-Einheit 5 (Register 41, 42, 43) ein, kodiert sie und überträgt sie in den Kanal mit Hilfe des phasenmanipulierten Kodesignals. Falls das Bit des Übertragungsbetriebs "0" ist, so wird die aus dem Kanal aufzunehmende Information demoduliert und dekodiert.

Im Übertragungsbetrieb wird durch die Anpaßeinheit 14 in den Kanal ein Frame (eine Signalstruktur) von phasenmanipulierten Signalen übertragen. Dabei formiert der Impulserzeuger 21 eine harmonische Referenzschwingung des Types $A_2 \cos(\omega t + \varphi)$, wobei $A_2$, $\omega$ und $\varphi$ jeweils die Amplitude, die Winkelfrequenz und die Anfangsphase bedeuten. Die Winkelfrequenz $\bar{\omega}$ ist zugleich die Trägerfrequenz und beträgt etwa 144,25 kHz. Auf diese Weise wird eine Übertragungsfrequenzbandbreite von 140 bis 148,5 kHz möglich

Der Phasenschieber 22 formiert zwei harmonische, 90°-verschobene Schwingungen $\Phi_1(t)$ und $\Phi_2(t)$

$$\Phi_1(t) = A \cos(\bar{\omega}_i t + \varphi_1)$$

$$\Phi_2(t) = A \sin(\bar{\omega}_i t + \varphi_2).$$

Die Schwingung $\Phi_1(t)$ wird an den Eingang des Phasenmodulators 19 abgegeben und im Übertragungsbetrieb beim Formieren des Signals ausgenutzt.

Die Manipulation der Trägerschwingung wird durch den Phasenmodulator 19 ausgeführt, an dessen einen Eingang der Kode von der Kommutationseinheit 18 und an dessen anderen Eingang eine durch den Impulserzeuger 21 formierte und vom Ausgang des Phasenschiebers 22 an den Eingang des Phasenmodulators 19 angekommene harmonische Schwingung der Trägerfrequenz übertragen wird. Die Nullphase der Trägerschwingung entspricht der logischen Null des Kodes und die 180°- Phase - der logischen Eins der Kodefolge. Nach einer Vorverarbeitung im Verstärker 20 und in der Anpaßeinheit 14 kommt das phasenmanipulierte Signal vom Ausgang des Phasenmodulators 19 in den Übertragungskanal an. Die Framestruktur der zu übertragenden Information besteht aus einer Präambel in Form eines Synchronisiersignals und aus nacheinander angeordneten informationsmodulierten orthogonalen (oder quasiorthogonalen) Kodefolgen. Die ganze Menge von informationsmodulierten Folgen bildet einen orthogonalen (quasiorthogonalen) Blockkode.

Die Synchronisierfolge besteht aus zwei Segmenten $S_1$ und $S_2$ mit guten Korrelationseigenschaften (kleine Werte der Nebenkeulen der Auto- und Vertauschungskorrelationsfunktionen) und weist eine gleiche Anzahl von logischen Nullen und Einsen auf, d.h. gehört zur Klasse der Symmetriefolgen.

Zu dem Verständnis einer derartigen Folge ist anzumerken, daß jedes Segment $S_1$ und $S_2$ bereits für sich eine gute Auto-Korrelationseigenschaft aufweist. Dies wird deutlich, wenn man sich die folge eines Segmentes $S_1$ vorstellt, unter der das identische Segment $S_1$ geschrieben wird, und das untere Segment 1 nunmehr jeweils schrittweise verschoben wird, und die Zahl der Übereinstimmungen überprüft wird. Eine gute Korrelationseigenschaft ist dann gegeben, wenn ein zentraler, maximaler Peak sichtbar wird und die Nebenkeulen gering sind.

Die Formierung des ersten Segments der Synchronisierfolge $S_1$ wird durch den Symmetriekodegenerator 15 mit Hilfe des Pseudozufallskodegenerators 25 ausgeführt. Als solcher Generator kann das rückgekoppelte Schieberegister zum Formieren der um ein Zeichen erweiterten, eine Anzahl M von Stellen aufweisenden M-Folge verwendet werden. Der Begriff M-Folge ist dabei ein Standard begriff. So weist der auf der Basis des Polynoms $f(x) = x^4 + x + 1$ formierte und durch Zugabe eines Null-Zeichens erweiterte Symmetriekode mit der Länge N=16 Stellen folgende Schreibweise auf:

$$S_1 = [s_{1,o}, S_{1,1...}, S_{1,N-1}] = 0000100110101111.$$

Vom Ausgang des Generators 15 aus kommt der Symmetriekode S1 an den Eingang der Vertauschungseinheit 16 an, wo in der Operativspeichereinheit 27 eine Vertauschung der Form $P_f$ der Symbole ausgeführt wird, ohne die Symmetriecharakteristik zu verletzen. Die Vertauschungsregel soll nicht die Signalkorrelationseigenschaften wesentlich verschlechtern. Also wenn die Vertauschung der Symbole nach der Regel

$$P_f = \begin{pmatrix} 1\ 2\ 3\ 4\ 5\ 6\ 7\ 8\ 9\ 10\ 11\ 12\ 13\ 14\ 15 \\ 0\ 3\ 4\ 5\ 6\ 15\ 1\ 2\ 8\ 12\ 13\ 10\ 11\ 9\ 14\ 7 \end{pmatrix}$$

ausgeführt wird, so entsteht die Folge einer anderen Form $S_3 = [s_{3,o}, s_{3,1,...}, s_{3,N-1}] = 0010001111010110$, die zu der Klasse der Pseudozufalls- und Symmetriefolgen mit guten Korrelationseigenschaften gehört. In der Einheit 16 wird die Vertauschung kontinuierlich ausgeführt. Zu diesem Zweck werden in der Operativspeichereinheit 27 zwei abwechselnd schreibende und lesende Speicher angeordnet. Der Schreibvorgang wird sukzessive und das Lesen nach der Vertauschungsregel ausgeführt. Der Kommutator 28 verbindet den Ausgang der Vertauschungseinheit mit den Ausgängen der Operativspeicher, die im Lesemodus arbeiten. Die Schreibe- und Leseadressen werden durch den Lese- und Schreibsignalgenerator 29 formiert, der durch die Signale von den Ausgängen des Steuersignalerzeugers 23, der Eingabe-Ausgabe-Einheit 5 aus gesteuert wird, die Taktimpulse kommen vom Ausgang des Impulserzeugers 21 an den Eingang des Generators 29 an. Bei der Formierung des Synchrosignals kommen vom Ausgang des Eingabe-Ausgabe-Einheit 5 ein Nullkode, vom Ausgang des Erzeugers der Zeitintervalle des Synchronsignals 32 eine logische Eins, vom Ausgang der Schaltung 33 - abwechselnd - eine logische Null und eine logische Eins, vom Ausgang des Erzeugers der Zeitintervalle des Frames 34 - eine logische Null an. Der Anfang der Formierung des Synchrosignals wird durch den Impuls gegeben, der vom Ausgang der Zufallsverzögerungseinheit 24 an den Eingang des Flipflops 36 ankommt.

Vom Ausgang des Symmetriekodegenerators 15 und der Vertauschungseinheit aus kommen die Kodes an die Eingänge des Logikumsetzers 17 an, an dessen Ausgang ein zweites Segment S2 des Synchronisiersignals formiert wird. In diesem Beispiel wird als eine logische Operation das Summieren nach dem Modul "zwei" gewählt, und das Signal am Ausgang des Logikumsetzers 17 wird folgenderweise aufgezeichnet:

$$S_2 = S_1 \oplus S_3 = 0010101001111001$$

Dieser Kode ist auch symmetriert und weist gute Korrelationseigenschaften auf. Das Synchronisiersignal $S_C$ wird durch eine Konkatenation (einen Zusammenschluß) der Signale von den Ausgängen des Symmetriekodegenerators 15 und des Logikumsetzers 17 aus gebildet

$$S_C = S_1|S_2 = 00001001101011110010101001111001.$$

Die Korrelationseigenschaften der gebildeten Kodefolge entsprechen einer Darstellung der Fig. 7a.

Die Anschlußoperation wird mit Hilfe der Kommutationseinheit 18 mit den Steuersignalen durchgeführt, die an den Eingängen der Kommutationseinheit 18 vom Ausgang des Steuersignalerzeugers 23 aus ankommen. Beim Ankommen an den Eingang der Einheit 18 der logischen Eins vom Ausgang des Erzeugers der Zeitintervalle des Synchronsignals 32 aus, und der logischen Null vom Ausgang des Frameszeitintervallerzeugers 34 und vom Ausgang der logischen UND-Schaltung 33 aus wird an den Ausgang der Kommutationseinheit 18 der Ausgang des Symmetriekodegenerators 15 angeschlossen. Beim Ankommen an den Eingang der Einheit 18 der logischen Eins vom Ausgang des Erzeugers der Zeitintervalle des Synchronsignals 32 und vom Ausgang der logischen UND-Schaltung 33 aus, und der logischen Null vom Ausgang des Frameszeitintervallerzeugers 34 aus wird an den Ausgang der Kommutationseinheit 18 der Ausgang des Logikumsetzers 17 angeschlossen. Beim Ankommen der logischen Null von Ausgang des Erzeugers der Zeitintervalle des Synchronsignals 32 und vom Ausgang der logischen UND-Schaltung 33 aus, und der logischen Eins vom Ausgang des Frameszeitintervallerzeugers 34 aus an die Eingänge der Einheit 18 der Vertauschungseinheit 16 ist die Formierung des Synchronsignals zu Ende, und die Vorrichtung beginnt ihre Arbeit im Betrieb des Kodierens und der Eingabedatenübertragung. In diesem Betrieb schließt die Kommutationseinheit 18 an ihren Eingang das Signal vom Ausgang der Vertauschungseinheit 16 aus an, und am Ausgang der UND-Schaltung 37 entsteht und kommt an die Registersynchronisiereingänge 41, 42, 43 ein Signal mit einer Periode an, die der doppelten Symmetriekodeperiode gleich ist. Nach diesem Synchronisiersignal erfolgt ein aufeinanderfolgendes Überschreiben der Datenblöcke, die jeweils K-Bit enthalten, wobei $K \leq \log_2 N$ aus einem Register 41-43 in ein anderes. Von den Ausgängen des letzten Registers 43 kommt der Datenblock an den Eingang des Lese- und Schreibsignal-Generators 29 an, der in der Vertauschungseinheit 16 angeordnet ist. Gemäß dem Datenblockkode wird in der Vertauschungseinheit 16 eine quasizyklische Verschiebung des Kodes $S_3 = [s_{3, o}, s_{3,1}, \ldots, s_{3, N-1}]$ durchgeführt. Dabei bleibt das in der Nullposition angeordnete Symbol $s_{3,0}$ unverändert, und die von der ersten Position bis die Position (N-1) angeordnete Symbole werden zyklisch verschoben. Die Verschiebungsgröße wird durch den Datenkode aufgegeben. Das Lesen des Datenkodes aus der Eingabe-Ausgabe-Einheit 5 erfolgt mit der Periode, die zweifach größer als die Periode der Kodefolge $S_3$ ist. Darum entsprechen jedem der Datenblöcke aus K Bits zwei gleiche Symmetriefolgeverschiebungen vom Ausgang der Vertauschungseinheit 16 aus. Wenn, z.B., K=0010, so wird am Ausgang der Kommutationseinheit 18 ein zusammengesetzter segmentsymmetrischer Kode formiert:

$$S_3(K) \mid S_3(K)=00001111010110011000011110101001.$$

Die Anzahl von Informationsblöcken im Frame wird durch die Kapazität des Erzeugers der Zeitintervalle des Frames 34 geregelt. Das Kodieren der Datenblöcke wird beim Erscheinen eines Frames am Ausgang des Frameszeitintertrallerzeugers 34 beendet, wenn der Erzeuger der Zeitintervalle des Synchronsignals 32 die logischen Nullpotentiale einstellt. Das Signal vom Ausgang der Dekodereinheit 35 aus schaltet den Flipflop 36 um und unterbricht auf kurze Zeit die Arbeit des Phasenmodulators 19.

Die Vorrichtung i formiert also im Übertragungsbetrieb das phasenmanipulierte Kodesignal vom Typ

$$x\,(t) = A(-1)^{C_i} \cos(\varpi_i t + \varphi_1)$$

wobei

$$C_i = [c_{i,0}, c_{i,1,\ldots}, c_{i,2N(m+1)-1}] =$$

$$= S_1|S_2|S_3(K_1)|S_3(K_1)|S_3(K_2)|S_3(K_2)|\ldots|S_3(K_m)|S_3(K_m)|$$

eine segmentsymmetrische Folge von Kodesymbolen $c_{i,l} \varepsilon \{0,1\}$ bedeutet, und jedes der Segmente S besteht aus einer gleichen Anzahl von 1- und 0-Symbolen und gehört der Klasse der orthogonalen (quasi orthogonalen) Kodes: $K_1$ ist eine Verschiebungsgröße, N - eine Segmentlänge, m - eine Anzahl von Datenblöcken im zu übertragenden Frame.

Die Empfangs-Übertragung-Vorrichtung formiert und gibt das Signal in den zufälligen Zeitintervallen ab. Das wird durch die Zufallsverzögerungseinheit 24 ausgeführt, die das Ankommen des Signals des entsprechenden Bit des Übertragungsbetriebs an den Eingang des Steuersignalerzeugers 23 für ein zufälliges Zeitintervall verzögert. Der Zufallszahlengenerator 45 formiert kontinuierlich den Kode der Zufallszahl h. Bem Nullwert des Bits des Übertragungsbetriebs ist der Zähler 46 im Nullzustand eingestellt. Beim Erscheinen eines Signals, das dem Einswert des Bits des Übertragungsbetriebs entspricht, wird am Ausgang der Eingabe-Ausgabe-Einheit 5 ein Impuls formiert, der den RS-Flipflop 48 umschaltet und die Stellen des Zählers in den Zustand einstellt, der durch den Zufallskode vom Ausgang des Zufallszahlengenerators 45 aus bestimmt wird. Der Zähler 46 weist eine Kapazität von Stellen M auf und zählt die Impulse vom Ausgang des Dekoders 26. Der Dekoder 47 ist auf den Nullkode der Ausgänge des Zählers 46 eingestellt, und der Impuls an dessem Ausgang erscheint nach der Umrechnung der Zufallszahl $(2^M-h)$ der Impulse vom Ausgang des Dekoders 26. Der Ausgang des Dekoders 47 ist mit dem Synchronosiereingang des D-Flipflops 49 verbunden, an dessen anderen Eingang ein Signal vom Ausgang des Flipflops 48 aus abgegeben wird. Nachdem am Ausgang des Dekoders 47 ein Impuls erschienen ist, wird am Ausgang des D-Flipflops 49 ein Ausgangspotential des Flipflops 48 formiert, dessen Erscheinungszeitpunkt durch den Differentiator 50 registriert wird.

Im Empfangsbetrieb realisiert die Vorrichtung die Aufgabe der inkohärenten Verarbeitung des phasenmanipulierten Signals mit einer unbekannten Anfangsphase der Trägerschwingung. Nachdem das zu empfangende Signal die Anpaßeinheit 14 und die binäre Quantisierungseinrichtung 8 durchgangen ist, kommt es an den Eingang der inkohärenten Demodulatoreneinheit 6 an, die die Gleichphasen- und Quadraturkomponenten auf der Videofrequenz (einer internen Verrechnungsfrequenz) ausrechnet. Die als Videofrequenz hier relevante Frequenz liegt in einem Bereich von 0 bis 4,5 kHz und entspricht somit der halben Bandbreite des zur Verfügung stehenden, etwa 9,5 kHz betragenden breiten Übertragungs-Frequenz-Bandes. Beim Empfang des Signals des j-Senders werden an den Ausgängen des inkohärenten Demodulators der i-Eingabe-Ausgabe-Einrichtung eine gleichphasige Komponente

$$I = \text{sgn}\{ A \, (-1)^{Ci} \cos [(\bar{\omega}_i - \bar{\omega}_j) \, t + (\varphi_i - \varphi_j)]\}$$

und eine Quadrature-Komponente

$$Q = \text{sgn}\{ A(-1)^{Ci} \sin[(\bar{\omega}_i - \bar{\omega}_j) \, t + (\varphi_i - \varphi_j)]\},$$

die jeweils $\Delta\bar{\omega} = (\bar{\omega}_i - \bar{\omega}_j)$; $\Delta\varphi = (\varphi_i - \varphi_j)$ - Verstimmungen der Frequenzen und der Anfangsphasen der Trägerschwingungen des Empfangs- und des Referenzsignals aufweisen, abgetrennt.

Die Gleichphasenkomponente wird infolge einer Filtrierung des Ergebnisses der Multiplikation des binären quantisierten Empfangssignals mit der harmonischen Gleichphasenkopie der Referenzfrequenz der Trägerschwingung im Signalband gebildet. Die Quadraturkomponente wird infolge einer Filterung im Signalband des Ergebnisses der Multiplikation des binären quantisierten Empfangssignals auf die harmonische Quadraturkopie der Referenzfrequenz der Trägerschwingung gebildet, die durch den Phasenschieber 22 um 90° relativ der Gleichphasenkopie der Referenzfrequenz der Trägerschwingung verschoben ist.

Der Frame des aufzunehmenden binären phasenmanipulierten Kodesignals wird in zwei Stufen verarbeitet. Auf der ersten Stufe wird eine Synchronisierung der Arbeit des Referenzsignalsgenerators 7 nach der Größe der Verzögerung der zu empfangenden Synchrofolge ausgeführt. Die Größe der Verzögerung wird durch die Differenziereinheit 12 nach dem Signalmaximum am Ausgang der Summiereinrichtung 11 bestimmt, die die Summe der Antwortverhalten der inkohärenten abgestimmten Filter 9 und 10 bestimmt, welche auf die Segmente $S_1$ und $S_2$ der Synchronisierfolge des aufzunehmenden Signals eingestellt sind. Die inkohärenten abgestimmten Filter 9 und 10 bestimmem die Summe der Module der Faltungen der Gleichphasen- und Quadraturkomponenten von den Ausgängen der inkohärenten Demodulatoreneinheit 6 und der Synchronsignalsegmentenkopien, die in die Speicherregister 59 (Kopie $S_1$), 57 (Kopie $S_2$) und Speicherregister 64 (Kopie $S_1$), 68 (Kopie $S_2$) eingetragen sind. Die Antwortverhalten der Filter 9 und 10 werden summiert und kommen an die Eingänge der Differenziereinheit 12 und der Schwellenwerteinheit 13 an. Der Bereich einer hohen Korrelation wird durch die Schwellenwerteinheit 13 bestimmt, wenn das Signal am Ausgang der Summiereinrichtung 11 den Soll-Schwellenwert überschreitet. Dabei wird am Ausgang der Schwellenwerteinheit 13 ein Signal formiert, das das Kommando abgibt, die Information in die Register 38, 39, 40 der Eingabe-Ausgabe-Einrichtung 5 einzugeben und den der Verzögerungsgröße am Ausgang der Differenziereinheit 12 entsprechenden Kode zu formieren.

Nach der Synchronisierung des Referenzsignalsgenerators 7 beginnt die zweite Stufe der Arbeit der Vorrichtung - das Dekodieren der Wörter (der eigentlichen Informationen) des Datenblockes. Auf dieser Stufe werden die Gleichphasen- und Quadraturkomponenten am Ausgang der inkohärenten Demodulatoreneinheit 6 in der Rückvertauschungseinheit 1 wieder vertauscht, im Intervall $T_a = N \, \tau$ der Analyse der Segmente $S_3$ (K) im inkohärenten Mehrkanalkorrelator 2 korrelativ verarbeitet; im Intervall $T_H = 2 \, N \, T$ für Ergebnisse der Korrelationsverarbeitung werden sich wiederholende Segmente gespeichert, und durch die Beschlußfassungseinheit 4 wird der Kode des Eingabedatenblocks nach der Nummer des Kanals des Mehrkanalspeichers 3 mit einer maximalen Korrelation bestimmt. T bedeutet hier die Dauer des Elementarintervalls der Referenz-Kodefolge.

Die Rückvertauschungseinheit 1 vertauscht die Anzeigen der Gleichphasen- und Quadraturkomponenten nach dem Transformationsgesetz: die Menge der Verschiebungen der Folge S3 wird in die Menge der Verschiebungen des symmetrischen Kodes S, transformiert. In diesem Beispiel führt die Vertauschung

$$P^{-1} \quad = \quad \begin{pmatrix} 0 \; 1 \; 2 \; 3 \; 4 \; 5 \; 6 \; 7 \; 8 \; 9 \; 10 \; 11 \; 12 \; 13 \; 14 \; 15 \\ 0 \; 1 \; 2 \; 3 \; 4 \; 15 \; 8 \; 13 \; 11 \; 12 \; 9 \; 10 \; 14 \; 5 \; 6 \; 7 \end{pmatrix} ,$$

die für die Matrixkolonnen der quasizyklischen Verschiebungen der Folge $S_3$

$$\begin{pmatrix}
0&0&1&0&0&0&1&1&1&1&0&1&0&1&1&0\\
0&1&0&0&0&1&1&1&1&0&1&0&1&1&0&0\\
0&0&0&0&1&1&1&1&0&1&0&1&1&0&0&1\\
0&0&0&1&1&1&1&0&1&0&1&1&0&0&1&0\\
0&0&1&1&1&1&0&1&0&1&1&0&0&1&0&0\\
0&1&1&1&1&0&1&0&1&1&0&0&1&0&0&0\\
0&1&1&1&0&1&0&1&1&0&0&1&0&0&0&1\\
0&1&1&0&1&0&1&1&0&0&1&0&0&0&1&1\\
0&1&0&1&0&1&1&0&0&1&0&0&0&1&1&1\\
0&0&1&0&1&1&0&0&1&0&0&0&1&1&1&1\\
0&1&0&1&1&0&0&1&0&0&0&1&1&1&1&0\\
0&0&1&1&0&0&1&0&0&0&1&1&1&1&0&1\\
0&1&1&0&0&1&0&0&0&1&1&1&1&0&1&0\\
0&1&0&0&1&0&0&0&1&1&1&1&0&1&0&1\\
0&0&0&1&0&0&0&1&1&1&1&0&1&0&1&1
\end{pmatrix}$$

verwendet ist, zur Matrix der quasizyklischen Verschiebungen des symmetrischen Kodes S1

$$\begin{pmatrix}
0&0&1&0&0&1&1&0&1&0&1&1&1&1&0&0\\
0&1&0&0&0&1&0&0&1&1&0&1&0&1&1&1\\
0&0&0&0&1&0&0&1&1&0&1&0&1&1&1&1\\
0&0&0&1&1&0&1&0&1&1&1&1&0&0&0&1\\
0&0&1&1&1&1&0&0&0&1&0&0&1&1&0&1\\
0&1&1&1&1&0&0&0&1&0&0&1&1&0&1&0\\
0&1&1&1&0&0&0&1&0&0&1&1&0&1&0&1\\
0&1&1&0&1&0&1&1&1&0&0&0&1&0&0\\
0&1&0&1&0&1&1&1&1&0&0&0&1&0&0&1\\
0&0&1&0&1&1&1&1&0&0&0&1&0&0&1&1\\
0&1&0&1&1&1&1&0&0&0&1&0&0&1&1&0\\
0&0&1&1&0&1&0&1&1&1&1&0&0&0&1&0\\
0&1&1&0&0&0&1&0&0&1&1&0&1&0&1&1\\
0&1&0&0&1&1&0&1&0&1&1&1&1&0&0&0\\
0&0&0&1&0&0&1&1&0&1&0&1&1&1&1&0
\end{pmatrix}$$

Jeder der Kanäle des inkohärenten Mehrkanalkorrelators rechnet die Modulsumme der Referenzkopiekorrelation der durch den Referenzsignalerzeuger 7 formierenden quasizyklischen Verschiebung S3(K) mit den Gleichphasen- und Quadraturkorrponenten aus, die von den Ausgängen der Einheit 6 aus an die Eingänge der Multiplizierer 73, 77, 80, 84, 87, 91 ankommen. Im Speicherintervall bestimmt die Beschlußfassungseinheit 4 vom Mehrkanalspeicher 3 aus die Nummer des Kanals mit höchstem Wert und rechnet diese Nummer in den Dateneinheitskode um, der in die Register 38, 39, 40 der Eingabe-Ausgabe-Einrichtung 5 eingegeben wird. Danach erfolgt durch den im Element 101 verzögerten Impuls das Nullen der gespeicherten Ergebnisse in den Registern 95, 97, 99 des Mehrkanalspeichers 3. Am Ende des Analyseintervalls kommt an die Einstelleingänge der Summiereinrichtungen 74, 78, 81, 85, 88, 92 des inkohärenten Mehrkanalkorrelators 2 ein durch Element 100 verzögerter Impuls an, der zum Nullen der Ergebnisse der Summierung führt.

Die Anwendung der neuen Vorrichtung bietet eine Möglichkeit, eine segmentmodulare Korrelationsverarbeitung sowie eine Anpaß-Filterung (abgestimmte Filterung) von komplizierten Signalen bei wesentlichen Verstimmungen der Trägerschwingungen eines Aufnahme- und eines Referenzsignals durchzuführen. Die gewöhnliche Korrelationsverarbeitung der komplizierten Signale im Intervall [O, T] ohne die Verwendung der Folge-Synchronisationssysteme ist bei Verstimmungen

$$\Delta\bar{\omega} \le \frac{\pi}{T}$$

möglich.

Durch eine segmentsymmetrische Struktur des zu übertragenden Signals und eine segmentmodulare Korrelations- und Anpaßfilterverarbeitung bei der Signalaufnahme bietet die neue Vorrichtung eine Möglichkeit, bei größeren Verstimmungen $\Delta\bar{\omega} \le \frac{2\pi}{T}$ der Trägerwellen des Aufnahme- und Übertragungssignals das Signal zu synchronisieren und zu dekodieren. In Fig. 7a ist ein ideelles Antwortverhalten eines gewöhnlichen abgestimmten Filters bei der Verarbeitung der Synchronisierfolge bei den Freqenz/Phasen-Nullverstimmungen der Trägerschwingungen gezeigt. Bei einer Verstimmungserhöhung bis zu $\Delta\bar{\omega} = 2\pi/T$, bei einer Nullverstimmung der Anfangsphasen, kann das gewöhnliche abgestimmte Filter einen unterdrückten Bereich der hohen Korrelation aufweisen (Fig. 7b), wodurch die Synchronisierung und Dekodierung des zusammengesetzten Signals unmöglich ist. Die Verbindung der Summiereinrichtung 11 mit den inkohärentangepaßten Filtern 9 und 10 verwirklicht eine segmentmodulare Anpaßverarbeitung eines komplizierten Signals. Die Verwendung einer segmentmodularen Anpaßverarbeitung gibt eine Möglichkeit, die Kontrastwirkung des Bereiches der hohen Korrelation zu regenerieren (Fig. 7 c) und die Verzögerung des Synchrosignals zu schätzen und den Blockkode zu dekodieren. Der Mindestwert der Höchstspitze des Bereiches der hohen Korrelation ist proportional zu einem Verstärkungsfaktor, der nicht niedriger als p ≥ N, wo N eine Segmentlänge bedeutet. Das Formieren des zu übertragenden Frames in Zufallszeitpunkten vermindert die Wahrscheinlichkeit der Verzerrungen der durch verschiedene, in einem Kanal arbeitende Sendeempfänger übertragenden Signale.

**Patentansprüche**

1. Vorrichtung (210) zur Steuerung einer Mehrzahl von Beschattungsanlagen (213), wie Rolladen, Markisen od. dgl., wobei den Beschattungsanlagen (213) jeweils ein gesonderter Antrieb (214) zugeordnet ist, der mit einer gemeinsamen Netz-Spannungs-Versorgungsleitung (216) unter Zwischenschaltung einer Steuereinheit (215, 215a) verbunden ist, die Signale nach Art von Steuer- und /oder Statusinformationen über die Netz-Spannungs-Versorgungsleitung (216) überträgt und empfängt, und auf diese Weise mit anderen Steuereinheiten (215, 215a) kommuniziert, wobei die Signale rauschartig auf die Netz-Spannungs-Versorgungsleitung (216) aufmoduliert sind

2. Vorrichtung nach Anspruch 1, **dadurch gekennzeichnet, daß** die Signale in einem Frequenzbandbereich zwischen 140 und 148,5 kHz angeordnet sind.

3. Vorrichtung nach Anspruch 1 oder 2, **dadurch gekennzeichnet, daß** die rauschartige Signal-Aufmodulation mittels der Spread-Spektrum-Technologie erfolgt.

4. Vorrichtung nach Anspruch 3, **dadurch gekennzeichnet, daß** die Signal-Modulation mittels einer Phasenmodulation, insbesondere mittels der BPSK (Binär-phase-shift-key)-Modulation erfolgt.

5. Vorrichtung nach einem der vorangegangenen Ansprüche, **dadurch gekennzeichnet, daß** die Steuereinheit (215, 215a) zur Ankopplung der Signale an die Netz-Spannungs-Versorgungsleitung (216) einen Transceiver aufweist.

6. Vorrichtung nach einem der vorangegangenen Ansprüche, **dadurch gekennzeichnet, daß** die Steuereinheit (215, 215a) eine die Innenabmessungen einer herkömmlichen Unterputz-Installationsdose nicht überschreitende Bauform aufweist.

7. Vorrichtung nach einem der vorangegangenen Ansprüche, **dadurch gekennzeichnet, daß** die Signale eine Signalleistung von weniger als 100 mW, insbesondere von weniger als 50 mW aufweisen.

8. Vorrichtung nach einem der vorangegangenen Ansprüche, **dadurch gekennzeichnet, daß** die übertragenen Signale jeweils einen Synchronisierungsteil und einen Informationsabschnitt umfassen.

9. Vorrichtung nach einem der vorangegangenen Ansprüche, **dadurch gekennzeichnet, daß** in jeder Steuereinheit (215, 215a) ein Schieberegister vorgesehen ist, welches durch Feststellung einer maximalen Korrelation des Synchronisierungsabschnittes eine Synchronisierung vornimmt.

10. Vorrichtung nach einem der vorangegangenen Ansprüche, **dadurch gekennzeichnet, daß** jeder Steuereinheit (215) ein Symmetriekodegenerator (15) zugeordnet ist.

11. Vorrichtung nach einem der vorangegangenen Ansprüche, **dadurch gekennzeichnet, daß** jeder Steuereinheit (215) eine Zufallverzögerungseinheit (24) zugeordnet ist.

12. Vorrichtung nach einem der vorangegangenen Ansprüche, **dadurch gekennzeichnet, daß** eine Signallänge von ca. 200 ms (Millisekunden) vorgesehen ist.

13. Vorrichtung nach einem der vorangegangenen Ansprüche, **dadurch gekennzeichnet, daß** die Signalübertragung bidirektional erfolgt.

FIG.1

# FIG. 2a

# FIG.2b

214

Motor

220

215

NERO
8013

219

N L ▽ △  219

217

218

221

NERO
8010

N L

L
N
P E

Hausnetz 230V

216

L
N
P E

216

## FIG.4

t = constant

## FIG.3

Stand der Technik

222

t = constant

FIG. 5

Dateneingang    Datenausgang

EP 1 276 250 A2

# FIG.6

vom
Impulsgenerator 15

von der
Einheit 5

von der
Einheit 24

zum Phasenmodulator 19

zur Einheit 5

zum Phasenmodulator 19

von der
Einheit 24

EP 1 276 250 A2

# FIG.7

von der Einheit 4

von der Schwellenwerteinheit 13

von der
Einheit 4

| 38 | 39 | 40 |

zu der Eingabe-Ausgabe-Einheit 5

von dem Steuersignalerzeuger 23

| 41 | 42 | 43 |

zu der Einheit 16

Dateneingang

| 44 | zum Steuersignalerzeuger 23

EP 1 276 250 A2

FIG. 8

von dem Generator 15

von der Einheit 5

zum Steuersignalerzeuger 23

45 46 47 48 49 50 24

FIG.9

vom Generator 21

von der Einheit 6

von der Einheit 6

zur Einheit 12

EP 1 276 250 A2

23

# FIG.10

von dem Generator 7

von der Einheit 4

von der Einheit 6

zur Einheit 6

von der Einheit 12

von dem Generator 21

# FIG.11a

$\Delta \varpi = 0. \ \Delta \varphi = 0$

# FIG.11b

$\Delta \varpi = 2\pi / T, \ \Delta \varphi = 0$

# FIG.11c

$\Delta \varpi = 2\pi / T, \ \Delta \varphi = 0$